# EUROPEAN PATENT SPECIFICATION

(11) **EP 3 323 925 B1**
(45) Date of publication and mention of the grant of the patent: **01.01.2020**
(21) Application number: 16823874.9
(22) Date of filing: 12.07.2016
(51) Int. Cl.: D06F 37/20, F16F 9/53, D06F 33/02, D06F 37/22, D06F 37/24

(54) **MAGNETIC VARIABLE-DAMPING VIBRATION-REDUCING CONTROL METHOD FOR WASHING MACHINE**
SCHWINGUNGSREDUZIERENDES STEUERUNGSVERFAHREN MIT MAGNETISCHER VARIABLER DÄMPFUNG FÜR WASCHMASCHINE
PROCÉDÉ DE COMMANDE DE RÉDUCTION DE VIBRATION À AMORTISSEMENT VARIABLE MAGNÉTIQUE DESTINÉ À UNE MACHINE À LAVER

(30) Priority: 14.07.2015 CN 201510413023
(43) Date of publication of application: 23.05.2018
(73) Proprietor: Qingdao Haier Drum Washing Machine Co., Ltd., Qingdao, Shandong 266101 (CN)
(72) Inventor: LV, Yanfen, Qingdao Shandong 266101 (CN); XU, Sheng, Qingdao Shandong 266101 (CN); LIANG, Qing, Qingdao Shandong 266101 (CN); PENG, Xiuwen, Qingdao Shandong 266101 (CN)
(74) Representative: Beck & Rössig European Patent Attorneys
(86) International application number: PCT/CN2016/089730
(87) International publication number: WO 2017/008727

(56) References cited:
- EP-A1- 0 878 574
- EP-A1- 0 878 574
- EP-A1- 1 564 434
- WO-A1-2007/009341
- CN-A- 102 162 499
- CN-A- 102 162 499
- CN-Y- 2 725 625
- JP-A- H04 371 193

## Description

### Technical Field

The present disclosure relates to the field of a washing machine, specifically a vibration reduction control method of a washing machine, and in particular to a magnetic variable-damping vibration reduction control method of the washing machine as defined by the preamble portion of claim 1.

### Background Art

In the existing control method, a large current is introduced to the absorber when the motor is at a low speed, a large damping is provided, and during high speed of the motor, no current is introduced and a small damping is provided. Currents of different intensities are introduced to the absorber during different program stages of washing machine, and thus it realizes the variable damping of the whole clothes washing process.

CN102884237A discloses a control method of a magnetorheological fluid shock absorber, only two-stage control is conducted in the dehydration process, V<6.6667 Hz (400RPM), the current of 1 A is introduced, and no current is introduced in other stages.

A magnetic variable-damping vibration reduction control method according to the preamble portion of claim 1 is known from EP 0 878 574 A1. Another method of this type in known from CN102162499A.

CN102162499A discloses a variable-damping shock absorber and a drum washing machine using the shock absorber. The shock absorber includes: a shock absorber barrel body composed of a damping chamber and a cushion chamber, a piston rod inserted into the barrel body, a piston fixedly arranged on the piston rod in the cushion chamber, wherein the cushion chamber is communicated with the outside. The cushion chamber is filled with magnetic fluid, the piston is internally provided with an electromagnet and an orifice which allows the magnetic fluid to pass through, and the electromagnet is connected with a main controller via the wire in the piston rod. The main controller changes the fluidity of the magnetic fluid via controlling the size of the current and utilizing the intensity change of the magnetism of the electromagnet, so as to realize the aim of adjusting the damping in real time. Based on different rotating speeds, four gears are set, which are respectively corresponding to different control current.

However, for each gear time period, the damping is still fixed and unchanged, and the influence of the movement speed of the shock absorber to the damping force is not considered. Through tests, it is detected that the damping force increases along with the increase of the current and the increase of the movement speed of the shock absorber. For example, in the resonance stage, it is originally set that a damping force of 120N can be generated by introducing a current of 1.0 A, however, when the eccentricity is larger than the original scalar quantity, the actual rotating speed of the drum is smaller, and after a current of 1.0 A is introduced, the output damping force then is less than 120N. Therefore, for each gear time period, the preconceived damping force still cannot be obtained when the input current is set to be fixed and unchanged.

In view of this, the present disclosure is hereby proposed.

### Summary

The objective of the present disclosure is to overcome the shortcomings of the prior art and provide a magnetic variable-damping vibration reduction control method of a washing machine, so as to adjust the size of the input current in real time and obtain the required damping force.

This technical problem is solved by the method of claim 1. Advantageous embodiments are indicated in further claims.

The amplitude of the vibration in real time can be realized through the setting of a sensor unit, and the sensor unit detects the vibration signals in real time and determines the amplitude A.

The control may method include the following steps:
Step 1: the sensor unit detecting the vibration signals, determining the amplitude A; and comparing the amplitude A detected and the preset amplitude A', if A<A', maintaining the current state, if A≥A', then entering the next step.
Step 2: a master control board detecting the real-time rotating speed n of a motor, and simultaneously calling the target rotating speed N set by the program, calculating the speed difference ΔN, and comparing the speed difference ΔN obtained from detection and calculation and the preset speed difference ΔN', if ΔN<ΔN', maintaining the current state, if ΔN≥ΔN', entering the next step.
Step 3: determining a damping force F which is possessed by the variable-damping shock absorber based on the detected amplitude A and the speed difference ΔN obtained through detection and calculation; determining the movement speed V of the variable-damping shock absorber based on the detected amplitude A and the actual speed n detected. And based on the damping force F which is possessed and the movement speed V, determining the current required by the variable-damping shock absorber, and the input current of the variable-damping shock absorber is adjusted.

In step 3, the master control board may be internally preset with the one-to-one correspondence relationship between the damping force F which should be possessed by the variable-damping shock absorber and the amplitude A as well as the speed difference ΔN, after the amplitude A and the speed difference ΔN are determined, the damping force F which should be possessed by the corresponding variable-damping shock absorber is acquired.

In step 3, the master control board may be internally preset with the corresponding relationship between the movement speed V of the variable-damping shock absorber and the amplitude A as well as the actual speed n: V= 2πηAK/60, wherein K is a correction coefficient, preferably, the value of the correction coefficient K is in a range of 0.2-0.5, and after the amplitude A and the actual speed n are determined, the movement speed V of the corresponding variable-damping shock absorber can be obtained through calculation.

In step 3, the master control board may be internally preset with the one-to-one correspondence relationship between the current I required by the variable-damping shock absorber and the damping force F which should be possessed by the variable-damping shock absorber as well as the movement speed V. After the damping force F which is possessed by the variable-damping shock absorber as well as the movement speed V are determined, the current I required by the corresponding variable-damping shock absorber is acquired, and the input current of the variable-damping shock absorber is adjusted to I.

In step 1, the preset amplitude A' may be set with four preset ranges comprising 0-20mm, 0-4mm, 0-8mm and 0-2mm, and preferably 2-10mm, 1-2mm, 0.5-1.5mm and 0.25-1.0mm, respectively corresponding to the following rotating speed ranges: a low-speed washing stage with a rotating speed of 0-1.3333 Hz (0-80RPM), a distribution stage with a rotating speed of 1.3333-2.5000 Hz (80-150RPM), an acceleration stage with a rotating speed of 2.5-6.6667 Hz (150-400RPM) and a high-speed dehydration stage with a rotating speed of greater than 6.6667 Hz (400RPM).

In step 3, the value of the preset speed difference ΔN' may be in a range of 0-0.500 Hz (0-30RPM), and preferably 0.0833-0.1667 (5-10RPM).

The master control board may set the input current of the variable-damping shock absorber into four gears which respectively correspond to the following four rotating speed ranges: a low-speed washing stage with a rotating speed of 0-1.333 Hz (0-80RPM), a distribution stage with a rotating speed of 1.3333-2.5000 Hz (80-150RPM), an acceleration stage with a rotating speed of 2.5000-6.6667 Hz (150-400RPM) and a high-speed dehydration stage with a rotating speed of greater than 6.6667 Hz (400RPM), and the input currents corresponding to each gear are respectively 0.1-0.5 A, 0.5-1.0 A, 1.0-1.5 As and 0 A.

The master control board may set the input current of the variable-damping shock absorber into four gears which respectively correspond to the following four rotating speed ranges: a low-speed washing stage with a rotating speed of 0-1.3333 Hz (0-80RPM), a distribution stage with a rotating speed of 1.3333-2.5000 Hz (80-150RPM), an acceleration stage with a rotating speed of 2.5000-6.6667 Hz (150-400RPM) and a high-speed dehydration stage with a rotating speed of greater than 6.6667 Hz (400RPM), and the input currents corresponding to each gear are respectively 0.2-0.4 A, 0.5-0.6 A, 1.2-1.3 A and 0 A.

After the technical solution of the present disclosure is adopted, the following beneficial effects are brought about:
1. In the control method of the present disclosure, a real-time detection process is added, the input current value is optimized in real time, such that the damping force generated actually approximate the required damping force to the greatest extent, the resonance of the whole system caused by the vibrating parts is avoided while the vibration is weakened to the greatest extent.
2. In the control method of the present disclosure, on the basis of determining the amplitude of the damping force by the size of the current, the influence of the size of the motor rotating speed (namely, the movement speed of the shock absorber) on the damping force should be considered more, the whole washing machine can be divided into multiple stages in terms of the rotating speed, in each stage, real-time detection is conducted and the current is finely adjusted, such that the actually generated damping force approximates the required damping force to the greatest extent.

The specific embodiments of the present disclosure will be further described in detail below in combination with the accompanying drawings.

### Brief Description of the Drawings

Fig. 1 is a flow chart of a control method of a embodiment in the present disclosure;
Fig. 2 is a schematic diagram of segmented control in the embodiment of the present disclosure;
Fig. 3 is a schematic diagram of a connection structure of a washing machine in the embodiment of the present disclosure;
Fig. 4 is a structural schematic diagram of a shock absorber in the embodiment of the present disclosure.

Reference numerals: 1. shell, 2. piston, 3. electromagnet, 4. piston rod, 5. sealing ring, 6. wire, 7. buffer spring, 8. cushion chamber, 9. buffering baffle plate, 10. damping chamber, 11. suspension spring, 22. outer drum, 33. variable-damping shock absorber, 44. housing.

### Detailed Description of the Embodiments

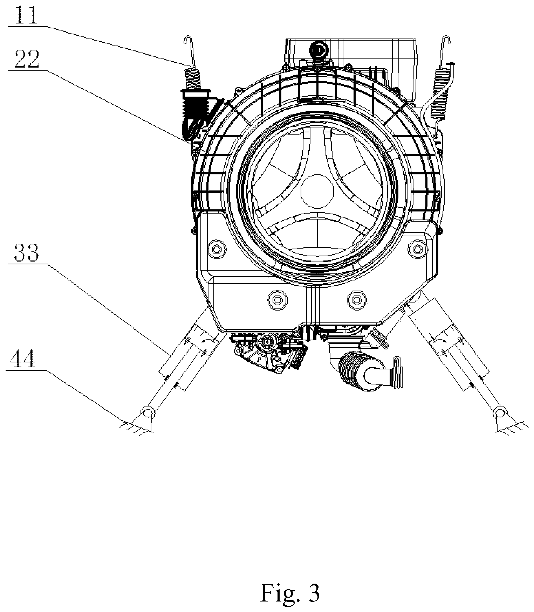

A magnetic variable-damping vibration reduction control method of a washing machine in the present disclosure, as shown in Fig. 3, a variable-damping shock absorber 33 is arranged at the bottom of the outer drum 22 of a washing machine, one end of the variable-damping shock absorber 33 is connected with the outer drum 22, while the other end is connected with a housing 44 of the washing machine. During stages with different rotating speeds, different currents are input into the variable-damping shock absorber, and the variable-damping shock absorber generates corresponding damping forces to reduce vibration, wherein in the vibration reduction process, the amplitude of vibration and the actual rotating speed of the motor are detected in real time, the difference between the actual rotating speed and the target rotating speed is calculated, and the size of the current is adjusted in real time based on the amplitude of the vibration and the difference between the actual rotating speed and the target rotating speed. The upper part of the outer drum 22 is hanged on the housing 44 of the washing machine via a suspension spring 11.

The amplitude of the damping force of the magnetic variable-damping shock absorber is related to the current, and the two are in a direct proportional relationship. Therefore, the size of the current required to be input by the shock absorber is generally determined after the required damping force is determined. However, when the current input by the shock absorber is fixed, sometimes, the generated damping forces are different, as the damping is also related to the movement speed of the shock absorber besides being related to the input current, and the damping force increases along with the increase of the current and the increase of the movement speed of the shock absorber. While the difference between the rotating speed during washing process and that during dehydration process of the washing machine is large, the movement speeds of the shock absorber are greatly different, so it is not accurate to obtain the preconceived damping force only based on the input current. Also, due to such reasons as load eccentricity, there's still a difference between the actual rotating speed of the washing machine and the set rotating speed, which leads to a difference between the actual movement speed of the shock absorber and the preset movement speed. For example, if it is assumed that a damping force of 120N can be generated by introducing a current of 1.0 A, however, when the eccentricity is larger than the original scalar quantity, the actual rotating speed of the drum is small, the movement speed of the shock absorber becomes small, and the damping force output when a current of 1.0 A is input is less than 120N. Generally, the nominal damping force specification of the variable-damping shock absorber is measured at a linear speed of 0.1 min/s.

The amplitude of the vibration is measured by the amplitude A, the real-time amplitude of vibration can be detected by setting a sensor unit, and the sensor unit detects the vibration signals in real time and determines the amplitude A, or a displacement sensor detects the displacement to acquire the amplitude A. However, the detection methods are not limited to the ones described above, and all the methods which can detect the amplitude in real time can be applied.

### Embodiment 1

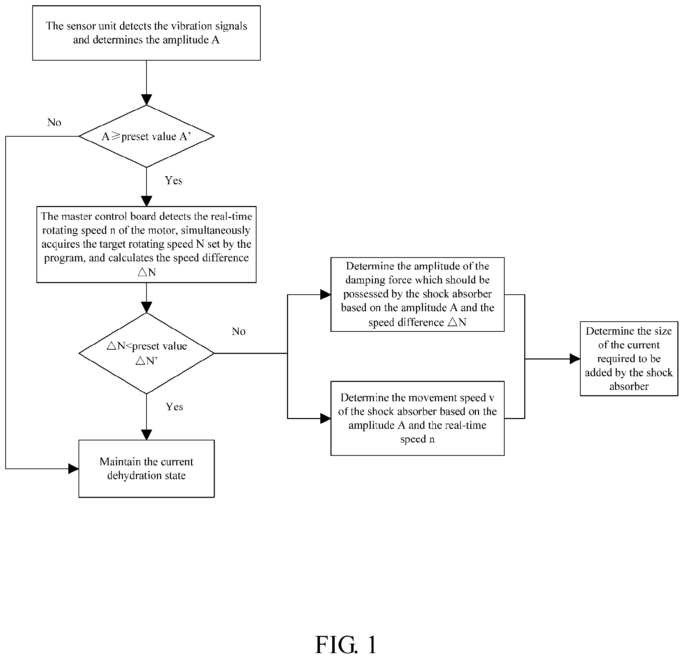

As shown in Fig. 1, in the present embodiment, a real-time detection process is added, the input current value is optimized in real time, such that the damping force generated actually approximate the required damping force to the greatest extent, and the resonance of the whole system caused by the vibrating parts is avoided while the vibration is weakened to the greatest extent, and the control method includes the following steps:
Step 1: the sensor unit detecting the vibration signals, determining the amplitude A, and comparing the detected amplitude A and the preset amplitude A'. If A<A', maintaining the current state, if A≥A', entering the next step.
Step 2: a master control board detecting the real-time rotating speed n of a motor, and simultaneously calling the target rotating speed N set by the program, calculating the speed difference ΔN, and comparing the speed difference ΔN obtained from detection and calculation and the preset speed difference ΔN'. If ΔN<ΔN', maintaining the current state, if ΔN≥ΔN', entering the next step.
Step 3: a damping force F which should be possessed by the variable-damping shock absorber being determined based on the detected amplitude A and the speed difference ΔN obtained through detection and calculation; the movement speed V of the variable-damping shock absorber being determined based on the detected amplitude A and the detected actual speed n, and based on the lamping force F which should be possessed and the movement speed V, the current I required by the variable-damping shock absorber being determined, and the input current of the variable-damping shock absorber being adjusted.

In step 3, the master control board is internally preset with the one-to-one correspondence relationship between the damping force F which should be possessed by the variable-damping shock absorber and the amplitude A as well as the speed difference ΔN, after the amplitude A and the speed difference ΔN are determined, the damping force F which should be possessed by the corresponding variable-damping shock absorber is acquired. The one-to-one correspondence relationship between the damping force F which should be possessed by the variable-damping shock absorber and the amplitude A as well as the speed difference ΔN is a table correspondence relationship, namely, the amplitude A and the speed difference ΔN correspond to the damping force F which should be possessed by the corresponding variable-damping shock absorber. The correspondence relationship is the correspondence relationship obtained by R&D personnel through numerous experiments or experiences, the correspondence relationship is the correspondence relationship of multiple points which are close but discrete to each other, and if the determined amplitude A and the speed difference ΔN do not have an identical point in the preset correspondence relationship, then close points can be found to determine the damping force F which should be possessed by the corresponding variable-damping shock absorber.

In step 3, the master control board is internally preset with the correspondence relationship between the movement speed V of the variable-damping shock absorber and the amplitude A and the actual speed n: V= 2πηAK/60, wherein K is a correction coefficient, preferably, the value of the correction coefficient K is in a range of 0.2-0.5, and after the amplitude A and the actual speed n are determined, the movement speed V of the corresponding variable-damping shock absorber can be obtained through calculation. The shock absorber is connected with the outer drum of the washing machine, and the vibration frequencies of the two are the same. During installation, the shock absorber has a certain included angle with the vertical direction, however, in the movement process of the washing machine, the included angle will be slightly changed, and therefore, the correction coefficient K is introduced. The movement speed V of the shock absorber can be calculated approximately through the following formula: V=KωA=2πfAK=2πnAK/60, wherein co is the angular speed of the rotation of a drum, n is the rotating speed of the drum with the unit of RPM and representing the number of turns that the drum rotates per minute. If the motor is a direct drive motor, the rotating speed of the motor is the same as that of the drum, a reduction gear is arranged between the motor and the drum, the rotating speed of the drum is obtained by multiplying the rotating speed of the motor by the reduction ratio, K is a correction coefficient and preferably, the value of K is in a range of 0.2-0.5, and more preferably 0.3-0.4.

In step 3, the master control board is internally preset with the one-to-one correspondence relationship between the current I required by the variable-damping shock absorber and the damping force F which should be possessed by the variable-damping shock absorber as well as the movement speed V. After the damping force F which should be possessed by the variable-damping shock absorber and the movement speed V are determined, the current I required by the corresponding variable-damping shock absorber is acquired, the input current of the variable-damping shock absorber is adjusted to I. The one-to-one correspondence relationship between the current I required by the variable-damping shock absorber and the damping force F which should be possessed by the variable-damping shock absorber as well as the movement speed V is a table correspondence relationship, namely, a certain damping force F which should be possessed by the variable-damping shock absorber and a certain movement speed V correspond to the current I required by the corresponding variable-damping shock absorber. The correspondence relationship is the correspondence relationship obtained by R&D personnel through numerous experiments or experiences, and the correspondence relationship is the correspondence relationship of multiple points which are close but discrete to each other. If the damping force F which should be possessed by the variable-damping shock absorber and the movement speed V do not have an identical point in the preset correspondence relationship, then close points can be found to determine the damping force F which should be possessed by the corresponding variable-damping shock absorber.

In step 3, the value of the preset speed difference ΔN' is in a range of 0-0.5000 Hz (0-30RPM), and preferably 0.0833-0.1667 Hz (5-10RPM).

In step 1, the preset amplitude A' are set with four preset ranges comprising 0-20mm, 0-4mm, 0-8mm and 0-2mm, and preferably 2-10mm, 1-2mm, 0.5-1.5mm and 0.25-1.0mm, respectively corresponding to the following rotating speed ranges: a low-speed washing stage with a rotating speed of 0-1.333 Hz (0-80RPM), a distribution stage with a rotating speed of 1.3333-2.5000 Hz (80-150RPM), an acceleration stage with a rotating speed of 2.5000-6.6667 Hz (150-400RPM) and a high-speed dehydration stage with a rotating speed of greater than 6.6667 Hz (400RPM).

Through the above control method, whether the current input at the moment can generate the damping force required at the moment can be detected in real time, and the input current can be optimized and adjusted in real time, such that the damping force actually generated can approximate the required damping force to the greatest extent. Meanwhile, in consideration of determining the magnitude of the damping force based on the size of the current, the influence of the rotating speed of the motor (namely, the movement speed of the shock absorber) on the damping force should be considered more.

In the whole clothes washing process, the motion parameters of the washing machine should be detected in real time, an appropriate damping force is input based on the detected motion parameters, and the amplitude of the damping force is controlled via the current value. The control method is not limited by washing stages, as long as the set control parameters are achieved, then corresponding current value can be input. The motion parameters then can be the rotating speed or the feedback current, however, the feedback current signals are intermittent and not continuous, and therefore, the rotating speed is selected as the detection amount.

In actual test, it is found that during dehydration operation, the difference ΔN between the actual rotating speed n and the target rotating speed N of the washing machine is influenced little by the load amount, the difference ΔN is mainly related to the size of eccentricity, the greater the eccentricity is, the smaller the actual rotating speed is, and vice versa. Therefore, the value of eccentricity can be determined by detecting the real-time rotating speed of the washing machine. When the washing machine is in operation, the operation state of the motor will be fed back to the master control board in real time, therefore, the motor can be used as a functional element detecting the rotating speed of the motor. The master control board adjusts the size of the current based on the operating state of the motor, so as to change the magnetic strength of the electromagnet, control the fluidity of the magnetic fluid and realize the adjustment of the damping force of the shock absorber.

### Embodiment 2

In the present embodiment, on the basis of determining the amplitude of the damping force by the size of the current, the influence of the size of the motor rotating speed (namely, the movement speed of the shock absorber) on the damping force is taken into consideration, the optimization of the current makes the actually generated damping force approximate the required damping force to the greatest extent. And the washing machine is divided into different stages based on the rotating speed, and based on segmented control, each working state stage of the segmented control is controlled in real time. During real-time control, the amplitude of the damping force can be determined based on the detected rotating speed difference ΔN of the motor and the amplitude of the vibration, and the size of the current required to be added is determined based on the actual rotating speed. The current is optimized and adjusted in real time.

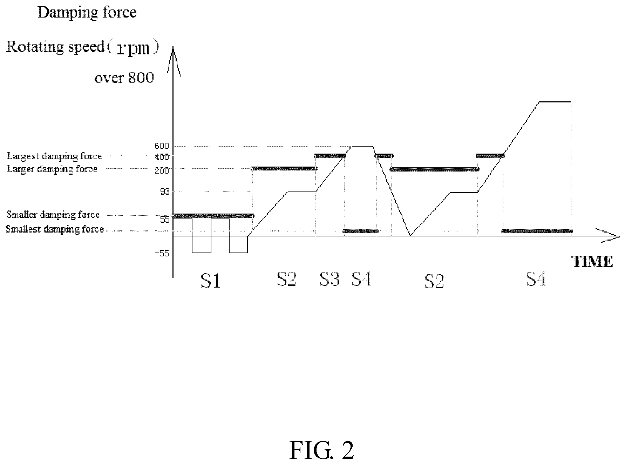

As shown in Fig. 2, in terms of the working process and rotating speed of the motor of the washing machine, the working states of the washing machine is divided into the following 4 stages, and an optimal current value is set based on empirical values.
S1: a washing stage, during this stage, the rotating speed is relatively low, the rotating speed is preferably 0-1.3333 Hz (0-80RPM), and no great amplitude will be generated. A relatively small damping force is applied to the shock absorber, preferably 80-100N, at this time, the current is 0.1-0.5 A, and preferably 0.2-0.4 A.
S2: a distribution stage, during this stage, the rotating speed is 1.3333-2.5000 Hz (80-150RPM), in this stage, washing is completed, and drainage process is also completed. The rotating speed of the inner drum increases to 1.5500 Hz (93 RPM) at a certain acceleration, such that the clothes in the washing machine are distributed on the drum wall evenly. At this time, the rotating speed is larger, the assembly inside and outside the drum will generate a smaller amplitude, and the shock absorber needs to generate a larger damping force. The damping force can be set to be 100-150N at this stage based on different washing machines, and the current is 0.5-1.0 A, and most preferably 0.6 A.
S3: an acceleration stage, during this stage, the rotating speed is 2.5000-6.6667 Hz (150-400RPM), the distribution of the washing machine is finished, and the washing machine needs to be operated at a high speed gradually. At this time, the rotating speed is increased, and the clothes in the drum contains a large amount of water which easily generate resonance. The damping force needs to be increased to a maximum value, so as to prevent the outer drum from colliding with the shell. At this stage, the damping force can be set to be in a range of 150-300N. At this time, the current is 1.0-1.5 A, and preferably 1.2 A.
S4: a high-speed dehydration stage, during this stage, the rotating speed is over 6.6667 Hz (400RPM), in this stage, the inner drum has been in operation at a higher speed for a certain time, and part of the water contained in the clothes has also been thrown off. Along with the improvement of the rotating speed of the washing machine, the amplitude will decrease gradually, however, the energy of vibration will be increased. Therefore, the connection between the assembly of the inner and outer drums and the housing should be disconnected, so as to reduce the vibration transmission of the assembly of the inner and outer drums to the housing. At this stage, the damping force of the shock absorber can be set to be in a range of 0-60N, and no current is introduced.

During segmented control, a process of real-time detection is added to the method, the input current value is optimized in real time, such that the actually generated damping force approximates the required damping force to the greatest extent. The damping is increased or decreased in a targeted manner during the low-speed operation of the vibration system, the resonance of the vibrating parts is avoided while the vibration is weakened to a great extent. During high-speed operation, the damping of the shock absorber is eliminated, the energy of the vibrating parts is prevented from being transmitted to the housing, and the resonance of the housing is avoided.

A real-time detection process is added in all the above stages, the input current value is optimized in real time, the actually generated damping force approximates the required damping force to the greatest extent, and the control method of real-time optimization includes the following steps:
Step 1: the sensor unit detecting the vibration signals, determining the amplitude A, and comparing the detected amplitude A and the preset amplitude A', if A<A', maintaining the current state, if A≥A', then entering the next step;
Step 2: a master control board detecting the real-time rotating speed n of a motor, and simultaneously calling the target rotating speed N set by the program, calculating the speed difference ΔN, and comparing the speed difference ΔN obtained from detection and calculation and the preset speed difference ΔN', if ΔN<ΔN', maintaining the current state, if ΔN≥ΔN', entering the next step; and
Step 3: a damping force F which should be possessed by the variable-damping shock absorber being determined based on the detected amplitude A and the speed difference ΔN obtained through detection and calculation; the movement speed V of the variable-damping shock absorber being determined based on the detected amplitude A and the detected actual speed n, and based on the lamping force F which should be possessed and the movement speed V, the current required by the variable-damping shock absorber being determined, and the input current of the variable-damping shock absorber being adjusted.

The description of specific details in the above steps is the same as that in embodiment 1.

The master control board sets the input current of the variable-damping shock absorber into four gears which respectively correspond to the following four rotating speed ranges: a low-speed washing stage with a rotating speed of 0-1.3333 Hz (0-80RPM), a distribution stage with a rotating speed of 1.3333-2.5000 Hz (80-150RPM), an acceleration stage with a rotating speed of 2.5000-6.6667 Hz (150-400RPM) and a high-speed dehydration stage with a rotating speed of greater than 6.6667 Hz (400RPM), and the input currents corresponding to each gear are respectively 0.1-0.5 A, 0.5-1.0 A, 1.0-1.5 A and 0 A.

Further preferably, the master control board sets the input current of the variable-damping shock absorber into four gears which respectively correspond to the following four rotating speed ranges: a low-speed washing stage with a rotating speed of 0-1.3333 Hz (0-80RPM), a distribution stage with a rotating speed of 1.3333-2.5000 Hz (80-150RPM), an acceleration stage with a rotating speed of 2.5000-6.6667 Hz (150-400RPM) and a high-speed dehydration stage with a rotating speed of greater than 6.6667 Hz (400RPM), and the input currents corresponding to each gear are respectively 0.2-0.4 A, 0.5-0.6 A, 1.2-1.3 A and 0 A.

Meanwhile, the master control board records the adjustment process of the input current by the variable-damping shock absorber, and outputs to the client periodically, so as to help the R&D personnel in the research and development of the machine, and meanwhile optimize the optimized value of the input current.

### Embodiment 3

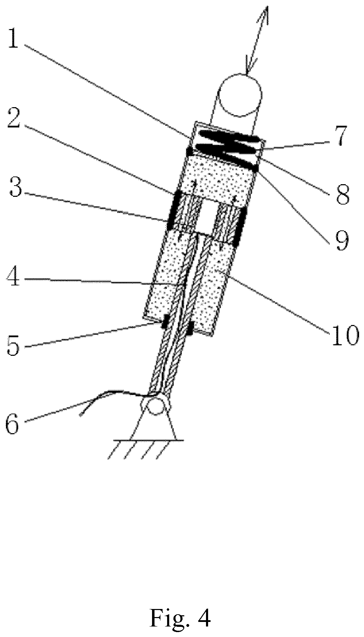

As shown in Fig. 4, the magnetic variable-damping shock absorber of the present embodiment includes such parts as a shell 1, a piston 2 and an electromagnet 3, wherein a damping chamber 10 and a cushion chamber 8 constitute a shock absorber barrel. The cushion chamber 8 is communicated with the outside, and the damping chamber 10 is filled with magnetic fluid. The magnetic fluid is composed of three substances including ferromagnetic solid particles, mother liquid oil and stabilizer. The piston is internally provided with an electromagnet and an orifice which allows the magnetic fluid to flow through, the electromagnet 3 is connected with the master control board via a wire 6 in the piston rod 4, the master control board changes the fluidity of the magnetic fluid through controlling the size of the current and utilizing the intensity change of the magnetism of the electromagnet, so as to realize the aim of adjusting the damping in real time.

In the present embodiment, the master control board is connected with the functional element, the size of the current is correspondingly changed based on the requirement of the functional element. When the master control board changes the current, the magnetism of the electromagnet 3 will be changed, at this time, magnetic control is generated at the position of the orifice, iron molecules (nanoparticles) in the magnetic fluid generate a horizontal particle chain under the effect of the magnetic force, the intensity of the particle chain changes along with the intensity of the magnetic force, the fluidity of the magnetic fluid in the orifice is influenced, and the fluidity of the magnetic fluid in the upper and lower chambers of the damping chamber is hindered. If the magnetic fluid wants to pass through the orifice, it needs to break through the particle chain composed of the iron molecules, so as to form a damping force. When the current becomes large, the magnetism of the electromagnet 3 becomes large, the fluidity of the electromagnet lowers, and the damping force increases; when the current becomes small, the magnetism of the electromagnet becomes small, the fluidity of the magnetic fluid is enhanced, and the damping force decreases. When the electromagnetic force is big enough, the shock absorber can be of a rigid body to completely limit the vibration of the vibrating parts. During high-speed operation, the damping of the shock absorber is eliminated, at this time, the electromagnetic force is small enough, to prevent the energy of the vibrating parts from passing onto the housing, and avoid resonance of the housing. When the damping is increased or decreased in a targeted manner, the resonance of the whole system caused by the vibrating parts can be avoided while vibration is reduced to a great extent.

What is described above is merely preferred embodiments of the present disclosure. It should be noted that, for those of ordinary skill in the art, under the premise of not departing from the present disclosure, various transformations and improvements can still be made, and such transformations and improvements shall also be deemed as falling within the protection scope of the present disclosure.

## Claims

1. A magnetic variable-damping vibration reduction control method of a washing machine, comprising:
providing a variable-damping shock absorber (33) arranged at a bottom of an outer drum (22) of a washing machine, wherein, one end of the variable-damping shock absorber (33) is connected with the outer drum (22), another end is connected with a housing of the washing machine, and during stages with different rotating speeds, different currents are input into the variable-damping shock absorber (33), and the variable-damping shock absorber (33) generates corresponding damping forces to reduce vibration, **characterized in that**:
in a vibration reduction process, detecting an amplitude A of vibration and an actual rotating speed N of a motor in real time,
calculating a speed difference ΔN between the actual rotating speed N and a target rotating speed,
determining a damping force F which is possessed by the variable-damping shock absorber (33) based on the amplitude A and the speed difference ΔN;
determining a movement speed V of the variable-damping shock absorber (33) based on the amplitude A and the actual rotating speed N, determining and adjusting an input current based on the damping force F and a movement speed V.

2. The magnetic variable-damping vibration reduction control method of the washing machine according to claim 1, wherein
a sensor unit is set to realize a real-time detection of the amplitude of vibration, and
the sensor unit detects a vibration signal in real time and determines the amplitude A.

3. The magnetic variable-damping vibration reduction control method of the washing machine according to claim 2, comprising following steps:
step 1: the sensor unit detecting the vibration signal, determining the amplitude A,
comparing the amplitude A detected and a preset amplitude A', if A<A', maintaining current state, if A≥A', then entering next step;
step 2: a master control board detecting the actual rotating speed n of the motor in real time, and simultaneously taking a target rotating speed N set by a program, calculating a speed difference ΔN, and comparing the speed difference ΔN obtained from detection and calculation with a preset speed difference ΔN',
if ΔN<ΔN', maintaining current state, if ΔN≥ΔN', entering next step; and
step 3: determining a damping force F which is possessed by the variable-damping shock absorber (33) based on the detected amplitude A and the speed difference ΔN obtained through detection and calculation;
determining a movement speed V of the variable-damping shock absorber (33) based on the amplitude A detected and the actual rotating speed N detected, and
based on the damping force F which is possessed and a movement speed V, determining the current required by the variable-damping shock absorber (33), and
adjusting the input current of the variable-damping shock absorber (33).

4. The magnetic variable-damping vibration reduction control method of the washing machine according to claim 3, wherein,
in step 3, the master control board is internally preset with a one-to-one correspondence relationship between the damping force F which is possessed by the variable-damping shock absorber (33) and the amplitude A and the speed difference ΔN,
after the amplitude A and the speed difference ΔN are determined, the damping force F which is possessed by the corresponding variable-damping shock absorber (33) is acquired.

5. The magnetic variable-damping vibration reduction control method of the washing machine according to claim 3, wherein,
in step 3, the master control board is internally preset with a corresponding relationship between the movement speed V of the variable-damping shock absorber and the amplitude A and the actual rotating speed n: V= 2πηAK/60, wherein K is a correction coefficient, and
after the amplitude A and the actual rotating speed n are determined, the movement speed V of the corresponding variable-damping shock absorber (33) is obtained through calculation.

6. The magnetic variable-damping vibration reduction control method of the washing machine according to claim 5, wherein a value of the correction coefficient K is in a range of 0.2-0.5.

7. The magnetic variable-damping vibration reduction control method of the washing machine according to claim 3, wherein,
in step 3, the master control board is internally preset with a one-to-one correspondence relationship between the current I required by the variable-damping shock absorber (33) and the damping force F which is possessed by the variable-damping shock absorber (33); and the movement speed V,
after the damping force F which is possessed by the variable-damping shock absorber (33) as well as the movement speed V are determined, the current I required by the corresponding variable-damping shock absorber (33) is acquired, and the input current of the variable-damping shock absorber (33) is adjusted to I.

8. The magnetic variable-damping vibration reduction control method of the washing machine according to claim 3, wherein,
in step 1, the preset amplitude A' are set four preset ranges comprising 0-20mm, 0-4mm, 0-8mm and 0-2mm respectively corresponding to following four rotating speed ranges: a low-speed washing stage with a rotating speed of 0-1.3333 Hz (0-80RPM), a distribution stage with a rotating speed of 1.3333-2.5000 Hz (80-150RPM), an acceleration stage with a rotating speed of 2.5000-6.6667 Hz (150-400RPM) and a high-speed dehydration stage with a rotating speed of greater than 6.6667 Hz (400RPM).

9. The magnetic variable-damping vibration reduction control method of the washing machine according to claim 8, wherein the preset amplitude A' are set four preset ranges of 2-10mm, 1-2mm, 0.5-1.5mm and 0.25-1.0mm respectively corresponding to the low-speed washing stage, the distribution stage, the acceleration stage and the high-speed dehydration stage.

10. The magnetic variable-damping vibration reduction control method of the washing machine according to claim 3, wherein in step 3, a value of the preset speed difference ΔN' is in a range of 0-0.5000 Hz (0-30RPM).

11. The magnetic variable-damping vibration reduction control method of the washing machine according to claim 10, wherein a value of the preset speed difference ΔN' is in a range of 0.0833-0.1667 Hz (5-10RPM).

12. The magnetic variable-damping vibration reduction control method of the washing machine according to any one claims from 3 toll, wherein the master control board sets the input current of the variable-damping shock absorber (33) into four gears which respectively correspond to the following four rotating speed ranges: a low-speed washing stage with a rotating speed of 0-1.3333 Hz (0-80RPM), a distribution stage with a rotating speed of 1.3333-2.5000 Hz (80-150RPM), an acceleration stage with a rotating speed of 2.5000-6.6667 Hz (150-400RPM) and a high-speed dehydration stage with a rotating speed of greater than 6.6667 Hz (400RPM), and
the input currents corresponding to gears are respectively 0.1-0.5 A, 0.5-1.0 A, 1.0-1.5 A and 0 A.

13. The magnetic variable-damping vibration reduction control method of the washing machine according to claim 12, wherein the master control board sets the input current of the variable-damping shock absorber (33) into four gears which respectively correspond to the following four rotating speed ranges: the low-speed washing stage with a rotating speed of 0-1.3333 Hz (0-80RPM), the distribution stage with a rotating speed of 1.3333-2.5000 Hz (80-150RPM), the acceleration stage with a rotating speed of 2.5000-6.6667 Hz (150-400RPM) and the high-speed dehydration stage with a rotating speed of greater than 6.6667 Hz (400RPM), and
the input currents corresponding to gears are respectively 0.2-0.4 A, 0.5-0.6 A, 1.2-1.3 A and 0 A.

## Patentansprüche

1. Schwingungsreduzierendes Steuerungsverfahren mit magnetischer variabler Dämpfung für eine Waschmaschine, umfassend:
Bereitstellen eines Stoßdämpfers mit variabler Dämpfung (33), der an einem Boden einer äußeren Trommel (22) einer Waschmaschine angeordnet ist, wobei ein Ende des Stoßdämpfers mit variabler Dämpfung (33) mit der äußeren Trommel (22) verbunden ist, ein anderes Ende mit einem Gehäuse der Waschmaschine verbunden ist, und wobei während Stufen mit unterschiedlichen Drehgeschwindigkeiten verschiedene Ströme in den Stoßdämpfer mit variabler Dämpfung (33) eingeleitet werden und der Stoßdämpfer mit variabler Dämpfung (33) entsprechende Dämpfungskräfte erzeugt, um Schwingungen zu reduzieren, **gekennzeichnet durch**:
in einem Schwingungsreduzierungsprozess, Ermitteln einer Amplitude A der Schwingung und einer tatsächlichen Drehgeschwindigkeit N eines Motors in Echtzeit,
Berechnen eines Geschwindigkeitsunterschiedes ΔN zwischen der tatsächlichen Drehgeschwindigkeit N und einer Zieldrehgeschwindigkeit,
Bestimmen einer Dämpfungskraft F, welche der Stoßdämpfer mit variabler Dämpfung (33) besitzt, basierend auf der Amplitude A und dem Geschwindigkeitsunterschied ΔN;
Bestimmen einer Bewegungsgeschwindigkeit V des Stoßdämpfers mit variabler Dämpfung (33) basierend auf der Amplitude A und der tatsächlichen Drehgeschwindigkeit N, Bestimmen und Anpassen eines Eingangsstroms basierend auf der Dämpfungskraft F und einer Bewegungsgeschwindigkeit V.

2. Schwingungsreduzierendes Steuerungsverfahren mit magnetischer variabler Dämpfung für eine Waschmaschine nach Anspruch 1, wobei
eine Sensoreinheit dazu eingestellt ist, eine Echtzeitermittlung der Schwingungsamplitude zu realisieren, und
die Sensoreinheit ein Schwingungssignal in Echtzeit ermittelt und die Amplitude A bestimmt.

3. Schwingungsreduzierendes Steuerungsverfahren mit magnetischer variabler Dämpfung für eine Waschmaschine nach Anspruch 2, umfassend folgende Schritte:
Schritt 1: an der Sensoreinheit, Ermitteln des Schwingungssignals, Bestimmen der Amplitude A,
Vergleichen der ermittelten Amplitude A und einer voreingestellten Amplitude A', wenn A < A', Beibehalten eines Stromzustands, wenn A ≥ A', dann weiter mit dem nächsten Schritt;
Schritt 2: an einer Hauptschalttafel, Ermitteln der tatsächlichen Drehgeschwindigkeit n des Motors in Echtzeit, und gleichzeitig Verwenden einer Zieldrehgeschwindigkeit N, die von einem Programm festgelegt wird, Berechnen eines Geschwindigkeitsunterschiedes ΔN und Vergleichen des Geschwindigkeitsunterschiedes ΔN, der aus der Ermittlung und Berechnung erhalten wird, mit einem voreingestellten Geschwindigkeitsunterschied ΔN',
wenn ΔN < ΔN', Beibehalten eines Stromzustands, wenn ΔN ≥ ΔN', weiter mit dem nächsten Schritt; und
Schritt 3: Bestimmen einer Dämpfungskraft F, welche der Stoßdämpfer mit variabler Dämpfung (33) besitzt, basierend auf der ermittelten Amplitude A und dem Geschwindigkeitsunterschied ΔN, der durch Ermittlung und Berechnung erhalten wird;
Bestimmen einer Bewegungsgeschwindigkeit V des Stoßdämpfers mit variabler Dämpfung (33) basierend auf der ermittelten Amplitude A und der ermittelten tatsächlichen Drehgeschwindigkeit N, und
basierend auf der Dämpfungskraft F, welche verwendet wird, und einer Bewegungsgeschwindigkeit V, Bestimmen des Stroms, der von dem Stoßdämpfer mit variabler Dämpfung (33) benötigt wird, und
Anpassen des Eingangsstroms des Stoßdämpfers mit variabler Dämpfung (33).

4. Schwingungsreduzierendes Steuerungsverfahren mit magnetischer variabler Dämpfung für eine Waschmaschine nach Anspruch 3, wobei
in Schritt 3 die Hauptschalttafel intern mit einer Eins-zu-Eins-Korrespondenzbeziehung zwischen der Dämpfungskraft F, welche der Stoßdämpfer mit variabler Dämpfung (33) besitzt, und der Amplitude A und der Geschwindigkeitsdifferenz ΔN, voreingestellt ist,
nachdem die Amplitude A und die Geschwindigkeitsdifferenz ΔN bestimmt wurden, die Dämpfungskraft F, die der entsprechende Stoßdämpfer mit variabler Dämpfung (33) besitzt, erhalten wird.

5. Schwingungsreduzierendes Steuerungsverfahren mit magnetischer variabler Dämpfung für eine Waschmaschine nach Anspruch 3, wobei
in Schritt 3 die Hauptschalttafel intern mit einer entsprechenden Beziehung zwischen der Bewegungsgeschwindigkeit V des Stoßdämpfers mit variabler Dämpfung und der Amplitude A und der tatsächlichen Geschwindigkeit n voreingestellt ist: V = 2πηAK/60, wobei K ein Korrekturkoeffizient ist, und
nachdem die Amplitude A und die tatsächliche Drehgeschwindigkeit n bestimmt wurden, die Bewegungsgeschwindigkeit V des entsprechenden Stoßdämpfers mit variabler Dämpfung (33) durch Berechnung erhalten wird.

6. Schwingungsreduzierendes Steuerungsverfahren mit magnetischer variabler Dämpfung für eine Waschmaschine nach Anspruch 5, wobei ein Wert des Korrekturkoeffizienten K im Bereich von 0,2 - 0,5 liegt.

7. Schwingungsreduzierendes Steuerungsverfahren mit magnetischer variabler Dämpfung für eine Waschmaschine nach Anspruch 3, wobei
in Schritt 3 die Hauptschalttafel intern mit einer Eins-zu-Eins-Korrespondenzbeziehung zwischen dem Strom I, der von dem Stoßdämpfer mit variabler Dämpfung (33) benötigt wird, und der Dämpfungskraft F, welche der Stoßdämpfer mit variabler Dämpfung (33) besitzt, voreingestellt ist; und der Bewegungsgeschwindigkeit V,
nachdem die Dämpfungskraft F, die der Stoßdämpfer mit variabler Dämpfung (33) besitzt, sowie die Bewegungsgeschwindigkeit V bestimmt wurden, der Strom I, der von dem entsprechenden Stoßdämpfer mit variabler Dämpfung (33) benötigt wird, erhalten wird, und der Eingangsstrom des Stoßdämpfers mit variabler Dämpfung (33) auf I angepasst wird.

8. Schwingungsreduzierendes Steuerungsverfahren mit magnetischer variabler Dämpfung für eine Waschmaschine nach Anspruch 3, wobei
in Schritt 1 die voreingestellte Amplitude A' auf vier voreingestellte Bereiche eingestellt wird, umfassend 0-20 mm, 0-4 mm, 0-8 mm und 0-2 mm, jeweils entsprechend den folgenden vier Drehgeschwindigkeitsbereichen: einer Waschstufe mit niedriger Geschwindigkeit mit einer Drehgeschwindigkeit von 0-1,3333 Hz (0-80 RPM), einer Verteilungsstufe mit einer Geschwindigkeit von 1,3333-2,5000 Hz (80-150 RPM), einer Beschleunigungsstufe mit einer Drehgeschwindigkeit von 2,5000-6,6667 Hz (150-400 RPM) und einer Hochgeschwindigkeits-Schleuderstufe mit einer Drehgeschwindigkeit von mehr als 6,6667 Hz (400 RPM).

9. Schwingungsreduzierendes Steuerungsverfahren mit magnetischer variabler Dämpfung für eine Waschmaschine nach Anspruch 8, wobei die voreingestellte Amplitude A' auf vier voreingestellte Bereiche von 2-10 mm, 1-2 mm, 0,5-1,5 mm und 0,25-1,0 mm eingestellt wird, die jeweils der Waschstufe mit niedriger Geschwindigkeit, der Verteilungsstufe, der Beschleunigungsstufe und der Hochgeschwindigkeits-Schleuderstufe entsprechen.

10. Schwingungsreduzierendes Steuerungsverfahren mit magnetischer variabler Dämpfung für eine Waschmaschine nach Anspruch 3, wobei in Schritt 3 ein Wert der voreingestellten Geschwindigkeitsdifferenz ΔN' in einem Bereich von 0-0,5000 Hz (0-30 RPM) liegt.

11. Schwingungsreduzierendes Steuerungsverfahren mit magnetischer variabler Dämpfung für eine Waschmaschine nach Anspruch 10, wobei ein Wert der voreingestellten Geschwindigkeitsdifferenz ΔN' in einem Bereich von 0,0833-0,1667 Hz (5-10 RPM) liegt.

12. Schwingungsreduzierendes Steuerungsverfahren mit magnetischer variabler Dämpfung für die Waschmaschine nach einem der Ansprüche von 3 bis 11, wobei die Hauptschalttafel den Eingangsstrom des Stoßdämpfers mit variabler Dämpfung (33) in vier Gänge einstellt, die jeweils den folgenden vier Drehgeschwindigkeitsbereichen entsprechen: einer Waschstufe mit niedriger Geschwindigkeit mit einer Drehgeschwindigkeit von 0-1,3333 Hz (0-80 RPM), einer Verteilungsstufe mit einer Geschwindigkeit von 1,3333-2,5000 Hz (80-150 RPM), einer Beschleunigungsstufe mit einer Drehgeschwindigkeit von 2,5000-6,6667 Hz (150-400 RPM) und einer Hochgeschwindigkeits-Schleuderstufe mit einer Drehgeschwindigkeit von mehr als 6,6667 Hz (400 RPM), und
die Eingangsströme entsprechend den Gängen jeweils 0,1-0,5 A, 0,5-1,0 A, 1,0-1,5 und 0 A betragen.

13. Schwingungsreduzierendes Steuerungsverfahren mit magnetischer variabler Dämpfung für die Waschmaschine nach Anspruch 12, wobei die Hauptschalttafel den Eingangsstrom des Stoßdämpfers mit variabler Dämpfung (33) in vier Gänge einstellt, die jeweils den folgenden vier Drehgeschwindigkeitsbereichen entsprechen: der Waschstufe mit niedriger Geschwindigkeit mit einer Drehgeschwindigkeit von 0-1,3333 Hz (0-80 RPM), der Verteilungsstufe mit einer Geschwindigkeit von 1,3333-2,5000 Hz (80-150 RPM), der Beschleunigungsstufe mit einer Drehgeschwindigkeit von 2,5000-6,6667 Hz (150-400 RPM) und der Hochgeschwindigkeits-Schleuderstufe mit einer Drehgeschwindigkeit von mehr als 6,6667 Hz (400 RPM), und
die Eingangsströme entsprechend den Gängen jeweils 0,2-0,4 A, 0,5-0,6 A, 1,2-1,3 und 0 A betragen.

## Revendications

1. Procédé de contrôle de réduction des vibrations à amortissement variable magnétique d'une machine à laver comprenant :
le fait de prévoir un absorbeur de chocs à amortissement variable (33) placé sur un fond d'un tambour extérieur (22) d'une machine à laver, une extrémité de l'absorbeur de chocs à amortissement variable (33) étant reliée au tambour extérieur (22), une autre extrémité étant reliée à un bâti de la machine à laver, et pendant les étages avec différentes vitesses de rotation, différents courants sont entrés dans l'absorbeur de chocs à amortissement variable (33) et l'absorbeur de chocs à amortissement variable (33) génère des forces d'amortissement correspondantes pour réduire les vibrations, **caractérisé en ce que** :
dans un processus de réduction de vibrations, une amplitude A de vibration et une vitesse de rotation actuelle N d'un moteur sont détectées en temps réel,
une différence de vitesse ΔN entre la vitesse de rotation actuelle N et une vitesse de rotation cible est calculée,
une force d'amortissement F qui est possédée par l'absorbeur de chocs à amortissement variable (33) est déterminée sur la base de l'amplitude A et de la différence de vitesse ΔN,
une vitesse de mouvement V de l'absorbeur de chocs à amortissement variable (33) basée sur l'amplitude A et la vitesse de rotation actuelle N est déterminée, un courant d'entrée est déterminé et ajusté sur la base de la force d'amortissement F et d'une vitesse de mouvement V.

2. Procédé de contrôle de réduction des vibrations à amortissement variable magnétique d'une machine à laver selon la revendication 1, une unité de détecteur étant réglée pour réaliser une détection en temps réel de l'amplitude de vibration et l'unité de détecteur détectant un signal de vibration en temps réel et déterminant l'amplitude A.

3. Procédé de contrôle de réduction des vibrations à amortissement variable magnétique d'une machine à laver selon la revendication 2 comprenant les étapes suivantes :
étape 1 : l'unité de détecteur détecte le signal de vibration, l'amplitude A est déterminée, l'amplitude A détectée est comparée à une amplitude préréglée A' si A <A', le maintien de l'état de courant, si A ≥ A', entrée de la prochaine étape :
étape 2 : un panneau de contrôle principal détecte la vitesse de rotation actuelle n du moteur en temps réel et prend simultanément une vitesse de rotation cible N fixée par un programme, une différence de vitesse ΔN est calculée et la différence de vitesse ΔN obtenue à partir de la détection et du calcul est comparée avec une différence de vitesse préréglée ΔN', si ΔN < ΔN', le maintien de l'état de courant, si ΔN ≥ ΔN', entrée de la prochaine étape :
étape 3 : une force d'amortissement F qui est possédée par l'absorbeur de chocs à amortissement variable (33) est déterminée sur la base de l'amplitude A détectée et de la différence de vitesse ΔN obtenue par la détection et le calcul, une vitesse de mouvement V de l'absorbeur de chocs à amortissement variable (33) basée sur l'amplitude A détectée et la vitesse de rotation actuelle N détectée est déterminée et le courant requis par l'absorbeur de chocs à amortissement variable (33) est déterminé sur la base de la force d'amortissement F qui est possédée et de la vitesse de mouvement V et le courant d'entrée de l'absorbeur de chocs à amortissement variable (33) est ajusté.

4. Procédé de contrôle de réduction des vibrations à amortissement variable magnétique d'une machine à laver selon la revendication 3, cependant que
dans l'étape 3, le panneau de contrôle principal est préréglé de manière interne avec une relation de correspondance un à un entre la force d'amortissement F qui est possédée par l'absorbeur de chocs à amortissement variable (33) et l'amplitude A et la différence de vitesse ΔN,
après que l'amplitude A et la différence de vitesse ΔN ont été déterminées, la force d'amortissement F qui est possédée par l'absorbeur de chocs à amortissement variable correspondant (33) est acquise.

5. Procédé de contrôle de réduction des vibrations à amortissement variable magnétique d'une machine à laver selon la revendication 3, cependant que
dans l'étape 3, le panneau de contrôle principal est préréglé de manière interne avec une relation correspondante entre la vitesse de mouvement V de l'absorbeur de chocs à amortissement variable et l'amplitude A et la vitesse de rotation actuelle n : V = 2πnAK/60, K étant un facteur de correction et
après que l'amplitude A et la vitesse de rotation actuelle n ont été déterminées, la vitesse de mouvement de l'absorbeur de chocs à amortissement variable correspondant (33) est obtenue par calcul.

6. Procédé de contrôle de réduction des vibrations à amortissement variable magnétique d'une machine à laver selon la revendication 5, une valeur du coefficient de correction K étant de l'ordre de 0,2 à 0,5.

7. Procédé de contrôle de réduction des vibrations à amortissement variable magnétique d'une machine à laver selon la revendication 3, cependant que
dans l'étape 3, le panneau de contrôle principal est préréglé de manière interne avec une relation de correspondance un à un entre le courant I requis par l'absorbeur de chocs à amortissement variable (33) et la force d'amortissement F qui est possédée par l'absorbeur de chocs à amortissement variable (33); et la vitesse de mouvement V,
après que la force d'amortissement F qui est possédée par l'absorbeur de chocs à amortissement variable (33) ainsi que la vitesse de mouvement V ont été déterminées, le courant I requis par l'absorbeur de chocs à amortissement variable correspondant (33) est acquis et le courant d'entrée de l'absorbeur de chocs à amortissement variable (33) est ajusté à I.

8. Procédé de contrôle de réduction des vibrations à amortissement variable magnétique d'une machine à laver selon la revendication 3, cependant que
dans l'étape 1 l'amplitude préréglée A' est réglée en quatre ordres de grandeur préréglés comprenant 0 à 20 mm, 0 à 4 mm, 0 à 8 mm et 0 à 2 mm qui correspondent respectivement à quatre plages de vitesse : une phase de lavage à faible vitesse avec une vitesse de rotation de 0 à 1,3333 Hz (de 0 à 80 trs/min), une phase de distribution avec une vitesse de rotation de 1,3333 à 2,50000 Hz (de 80 à 150 trs/min), une phase d'accélération avec une vitesse de rotation de 2,50000 à 6,66667 Hz (de 150 à 400 trs/min) et une phase d'essorage à haute vitesse avec une vitesse de rotation supérieure à 6,6667 Hz (400 trs/min).

9. Procédé de contrôle de réduction des vibrations à amortissement variable magnétique d'une machine à laver selon la revendication 8, cependant que l'amplitude préréglée A' est réglée en quatre ordres de grandeur préréglés comprenant 2 à 10 mm, 1 à 2 mm, 0,5 à 1,5 mm et 0,25 à 1,0 mm qui correspondent respectivement à la phase de lavage à faible vitesse, la phase de distribution, la phase d'accélération et la phase d'essorage à haute vitesse.

10. Procédé de contrôle de réduction des vibrations à amortissement variable magnétique d'une machine à laver selon la revendication 3, cependant que dans l'étape 3 une valeur de la différence de vitesse préréglée ΔN' est de l'ordre de 0 à 0,5000 Hz (de 0 à 30 trs/min).

11. Procédé de contrôle de réduction des vibrations à amortissement variable magnétique d'une machine à laver selon la revendication 3, cependant qu'une valeur de la différence de vitesse préréglée ΔN' est de l'ordre de 0,0833 à 0,1667 Hz (de 5 à 10 trs/min).

12. Procédé de contrôle de réduction des vibrations à amortissement variable magnétique d'une machine à laver selon l'une quelconque des revendications 3 à 11, le panneau de contrôle principal réglant le courant d'entrée de l'absorbeur de chocs à amortissement variable (33) en quatre rapports qui correspondent respectivement aux ordres de grandeurs suivants de vitesse de rotation : une phase de lavage à faible vitesse avec une vitesse de rotation de 0 à 1,3333 Hz (de 0 à 80 trs/min), une phase de distribution avec une vitesse de rotation de 1,3333 à 2,50000 Hz (de 80 à 150 trs/min), une phase d'accélération avec une vitesse de rotation de 2,50000 à 6,66667 Hz (de 150 à 400 trs/min) et une phase d'essorage à haute vitesse avec une vitesse de rotation supérieure à 6,6667 Hz (400 trs/min) et les courants d'entrée correspondant aux rapports étant respectivement de 0,1 à 0,5 A, 0,5 à 1,0 A, 1,0 à 1,5 A et 0 A.

13. Procédé de contrôle de réduction des vibrations à amortissement variable magnétique d'une machine à laver selon la revendication 12, le panneau de contrôle principal réglant le courant d'entrée de l'absorbeur de chocs à amortissement variable (33) en quatre rapports qui correspondent respectivement aux ordres de grandeurs suivants de vitesse de rotation : une phase de lavage à faible vitesse avec une vitesse de rotation de 0 à 1,3333 Hz (de 0 à 80 trs/min), une phase de distribution avec une vitesse de rotation de 1,3333 à 2,50000 Hz (de 80 à 150 trs/min), une phase d'accélération avec une vitesse de rotation de 2,50000 à 6,66667 Hz (de 150 à 400 trs/min) et une phase d'essorage à haute vitesse avec une vitesse de rotation supérieure à 6,6667 Hz (400 trs/min) et
les courants d'entrée correspondant aux rapports étant respectivement de 0,2 à 0,4 A, 0,5 à 0,6 A, 1,2 à 1,3 A et 0 A.
